# FASCICULE DE BREVET EUROPEEN

(11) **EP 2 997 248 B1**
(45) Date de publication et mention de la délivrance du brevet: **20.09.2017**
(21) Numéro de dépôt: 14729701.4
(22) Date de dépôt: 14.05.2014
(51) Int. Cl.: F02K 1/76, F02K 1/72, F02K 1/80

(54) **ENSEMBLE PROPULSIF POUR AÉRONEF**
FLUGZEUGANTRIEBSANORDNUNG
AIRCRAFT PROPULSION ASSEMBLY

(30) Priorité: 14.05.2013 FR 1354306
(43) Date de publication de la demande: 23.03.2016
(73) Titulaire: Safran Nacelles, 76700 Gonfreville-l'Orcher (FR)
(72) Inventeur: HUE, Corentin, F-76600 Le Havre (FR); DELESALLE, Thibault, F-76430 Saint-Romain-de-Colbosc (FR)
(74) Mandataire: Gaillarde, Frédéric F. Ch.
(86) Numéro de dépôt international: PCT/FR2014/051120
(87) Numéro de publication internationale: WO 2014/184493

(56) Documents cités:
- WO-A1-2010/119210
- WO-A2-2005/026518
- FR-A1- 2 911 372
- US-A1- 2003 101 712

## Description

La présente invention se rapporte à un ensemble propulsif pour aéronef selon la revendication 1. Un aéronef est mu par plusieurs turboréacteurs logés chacun dans une nacelle. Une nacelle présente généralement une structure tubulaire suivant un axe longitudinal comprenant une section amont fixe constituée par une entrée d'air en amont du turboréacteur, une section médiane fixe destinée à entourer une soufflante du turboréacteur, une section aval abritant des moyens d'inversion de poussée et destinée à entourer la chambre de combustion du turboréacteur, l'amont et l'aval de la nacelle étant définis par référence au sens d'écoulement du flux d'air dans la nacelle en fonctionnement jet direct, l'amont de la nacelle correspondant à une partie de la nacelle par laquelle le flux d'air pénètre, et l'aval correspondant à une zone d'éjection dudit flux d'air.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé « veine annulaire». Les deux flux d'air sont éjectés du turboréacteur par l'arrière de la nacelle.

La veine annulaire est formée par une structure externe, dite Outer Fixed Structure (OFS) et une structure interne concentrique, dite Inner Fixed Structure (IFS), entourant la structure du moteur proprement dite à l'aval de la soufflante. Les structures interne et externe appartiennent à la section aval.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend un ou plusieurs capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le ou les capot(s) d'inverseur n'ayant qu'une simple fonction de coulissage sensiblement le long de l'axe longitudinal de la nacelle et visant à découvrir ou recouvrir ces grilles. Des portes de blocage complémentaires, également appelées volets, activées par le coulissement du capotage, permettent généralement une fermeture de la veine en aval des grilles de manière à optimiser la réorientation du flux froid.

Le coulissage du capotage est réalisé grâce à un dispositif de commande et d'actionnement d'inverseur comprenant une pluralité d'actionneurs reliés au(x) capot(s) mobile(s) de l'inverseur. Ces actionneurs peuvent être constitués par des vérins actionnés de manière hydraulique, pneumatique ou encore électrique, de manière à alléger la nacelle et à en simplifier le fonctionnement, notamment au niveau des cycles de maintenance nécessaires et de la gestion des fluides hydrauliques ou pneumatiques.

Les systèmes d'actionnement électriques permettent une gestion optimale de l'énergie en fonction de la puissance réellement nécessaire au fonctionnement de ces systèmes tout en occupant moins d'espace dans la nacelle et en ne requérant pas de circuit de circulation de fluide sous pression. Les actionneurs électriques sont constitués par des vérins typiquement mis en mouvement par l'intermédiaire d'un ou plusieurs moteurs électriques montés sur la structure fixe de la nacelle, ou sur le carter entourant la soufflante du turboréacteur.

Par ailleurs, la structure tubulaire de la nacelle est généralement terminée par une tuyère d'éjection, pouvant être fixe ou à section variable (« Variable Fan Nozzle » en terminologie anglo-saxonne), que nous désignerons « tuyère variable » dans la suite de la description.

Dans un type de réalisation, la tuyère variable est formée d'éléments mobiles comprenant typiquement un ou plusieurs capots coulissant monté(s) en aval du ou de(s) capot(s) d'inverseur et configurés de façon à permettre une variation de la section d'éjection du flux d'air secondaire au niveau de la sortie de la veine annulaire et afin d'optimiser les performances du turboréacteur en fonction des phases de vol.

Cette tuyère peut être associée à un système de commande et d'actionnement indépendant de celui de l'inverseur, comprenant une pluralité d'actionneurs constitués par des vérins, par exemple électriques, actionnés par l'intermédiaire d'un ou plusieurs moteurs électriques montés en aval du ou des capot(s) mobile(s) de l'inverseur.

En situation d'inversion de poussée, lorsque l'inverseur est totalement déployé, la section de sortie de la tuyère n'a quasiment aucun impact sur la poussée générée par le turboréacteur, le flux d'air secondaire réalisant la partie la plus importante de la poussée du turboréacteur étant redirigé par l'inverseur vers l'amont de la nacelle. La tuyère peut donc indifféremment se trouver dans une position totalement rétractée ou totalement déployée, ou encore dans une position intermédiaire à ces deux positions extrêmes.

Toutefois, un déplacement intempestif du ou des capot(s) de la tuyère lorsque la nacelle est en fonctionnement de jet inversé est préjudiciable.

En effet, le dispositif d'actionnement de l'inverseur de poussée peut être alimenté par le réseau électrique avion lorsque la nacelle est en fonctionnement de jet inversé. Ce réseau peut ne pas être adapté pour alimenter en simultané les dispositifs d'actionnement de l'inverseur de poussée et de la tuyère variable. Un actionnement intempestif du ou des capot(s) de la tuyère variable pourrait entraîner un dysfonctionnement du réseau électrique de l'avion, ce qui pourrait entraîner un dysfonctionnement de l'inverseur de poussée.

Afin de pallier un tel inconvénient on connaît de l'art antérieur une solution consistant à prévoir des systèmes redondants bloquant le déplacement de la tuyère lorsque l'inverseur de poussée est en train d'être déployé ou lorsqu'il est déployé. Ces systèmes de verrouillage redondants augmentent toutefois considérablement le poids de la nacelle. En outre, leur fiabilité n'est pas optimale, et un déplacement intempestif de la tuyère ne peut être totalement exclu.

La présente invention vise à pallier ces inconvénients, et se rapporte à cet effet à un ensemble propulsif pour aéronef, comprenant une nacelle pour turboréacteur, ladite nacelle comprenant une structure fixe et une structure mobile en aval de ladite structure fixe, ladite structure mobile comprenant :
- un dispositif d'inversion de poussée comprenant au moins un capot mobile en translation le long d'un axe sensiblement longitudinal de la nacelle entre une position rétractée correspondant à un fonctionnement jet direct de la nacelle et une position déployée correspondant à une position jet inversé de la nacelle,
- une tuyère d'éjection d'un flux d'air secondaire, en aval dudit dispositif d'inversion de poussée, comprenant un dispositif de commande et d'actionnement électrique de ladite tuyère,
ledit ensemble étant remarquable en ce que le dispositif de commande et d'actionnement de la tuyère comprend au moins un interrupteur électrique adapté pour être fermé lors d'un fonctionnement jet direct de la nacelle et pour être ouvert lors d'un fonctionnement jet inversé de la nacelle, ledit interrupteur électrique comprenant au moins un connecteur fixe solidaire de la structure fixe de la nacelle ou d'un carter de soufflante du turboréacteur, et au moins un connecteur mobile solidaire du capot du dispositif d'inversion de poussée, lesdits connecteurs étant conformés pour coopérer entre eux lorsque la nacelle est en fonctionnement jet direct et pour ne pas coopérer entre eux lorsque la nacelle est en fonctionnement jet inversé.

Ainsi, en prévoyant un dispositif de commande et d'actionnement électrique de la tuyère variable comprenant un interrupteur électrique adapté pour être fermé lorsque la nacelle se trouve en fonctionnement jet direct et ouvert lorsque la nacelle se trouve en fonctionnement jet inversé, le dispositif d'actionnement de la tuyère variable est automatiquement privé d'alimentation électrique, ce qui permet de déconnecter la tuyère variable du réseau électrique de l'avion pendant la phase d'inversion de poussée, et ainsi d'éviter un déplacement intempestif de la tuyère variable pendant la phase d'inversion de poussée.

L'interrupteur électrique constitue à cet effet un moyen simple de déconnexion du dispositif d'actionnement de la tuyère lorsque la nacelle est en fonctionnement jet inversé.

Lorsque la nacelle retrouve sa position de fonctionnement jet direct, l'interrupteur passe automatiquement de sa position ouverte à sa position fermée, autorisant en conséquence l'alimentation électrique du dispositif d'actionnement de la tuyère variable, et en conséquence une variation de la section de sortie de la tuyère.

De plus, en prévoyant un interrupteur électrique comprenant un ensemble de connecteurs fixe et mobile, on évite une perturbation du réseau électrique de l'avion en ce que la transmission du courant électrique est directement réalisée par contact entre les connecteurs fixe et mobile.

Avantageusement, le connecteur mobile est monté en extrémité amont dudit capot du dispositif d'inversion de poussée, et le connecteur fixe est monté en extrémité aval de la structure fixe de la nacelle ou du carter de soufflante du turboréacteur, ce qui permet de relier les connecteurs électriques fixes et les connecteurs électriques mobiles directement entre eux.

Plus précisément, le connecteur fixe comprend au moins un contact électrique fixe et le connecteur mobile comprend au moins un contact électrique mobile, et un axe longitudinal dudit contact électrique fixe est sensiblement confondu avec un axe longitudinal dudit contact électrique mobile au moins lorsque l'interrupteur est dans une position fermée.

Optionnellement, au moins un connecteur fixe, respectivement mobile, est conformé pour supporter un désaxage axial, radial ou angulaire d'au moins un connecteur mobile, respectivement fixe.

Cela permet très avantageusement d'absorber les désaxages axiaux, radiaux et angulaires dus aux déformations de la structure, de façon à ne pas endommager les contacts électriques et à assurer la continuité électrique lorsque l'interrupteur est fermé.

Le capot du dispositif d'inversion de poussée est mis en mouvement grâce à un dispositif de commande et d'actionnement comprenant une pluralité de vérins actionnés par l'intermédiaire d'au moins un moteur électrique commandé par un boîtier de gestion électronique du dispositif d'inversion de poussée.

Le dispositif de commande et d'actionnement de la tuyère variable comprend :
- un boîtier de gestion électronique de la tuyère, relié audit interrupteur électrique,
- au moins un vérin actionné par l'intermédiaire d'au moins un moteur électrique monté sur ledit capot du dispositif d'inversion de poussée, ledit moteur étant relié audit interrupteur électrique.

Plus précisément, le boîtier de gestion électronique de la tuyère variable est relié audit au moins un connecteur fixe de l'interrupteur électrique, et ledit au moins un connecteur mobile est relié au moteur électrique dudit vérin, ainsi qu'à des éléments de pilotage et de surveillance du système de commande de la tuyère variable.

D'autres caractéristiques, buts et avantages de la présente invention apparaîtront à la lecture de la description qui va suivre et à l'examen des figures ci-annexées, dans lesquelles :
- la figure 1 illustre l'ensemble propulsif selon l'invention, en fonctionnement jet direct, et la tuyère étant en position escamotée ;
- la figure 2 illustre un premier mode de réalisation de l'interrupteur électrique selon l'invention, en position fermée ;
- la figure 3 illustre l'interrupteur électrique selon un deuxième mode de réalisation, en position ouverte ;
- la figure 4 est une vue similaire à celle de la figure 1, la tuyère étant déplacée vers l'aval de la nacelle ;
- la figure 5 illustre l'ensemble propulsif en fonctionnement jet inversé, la tuyère étant déplacée vers l'aval de la nacelle.

Sur l'ensemble des figures, des références identiques ou analogues désignent des organes ou ensembles d'organes identiques ou analogues.

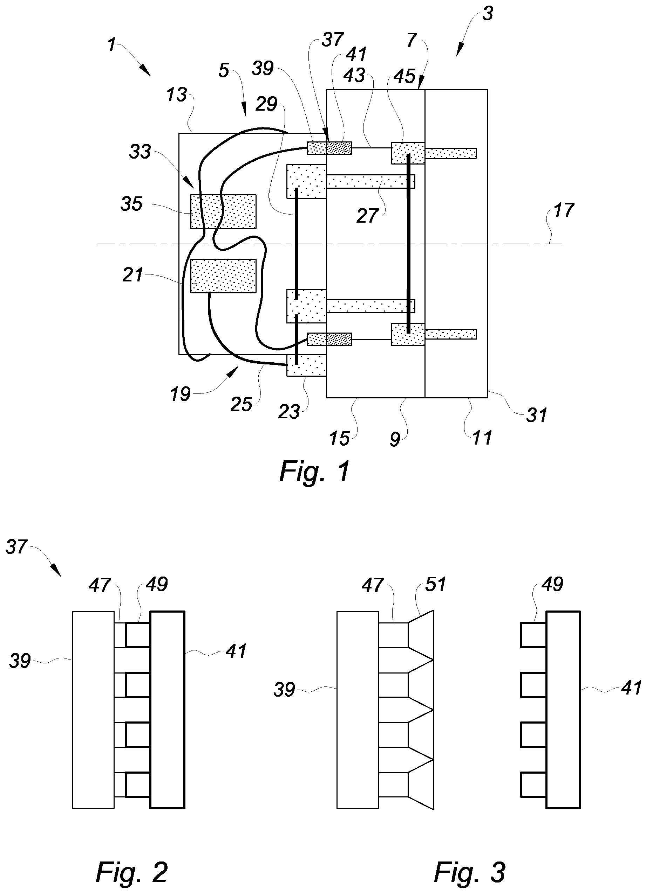

On se réfère à la figure 1 représentant schématiquement un ensemble propulsif 1 selon l'invention.

L'ensemble propulsif 1 comprend une nacelle 3 supportant un turboréacteur 5.

Pour plus de visibilité, la structure fixe de la nacelle, constituée par la section amont d'entrée d'air et la section médiane, a été ôtée. Ainsi, sur la nacelle de la figure 1 est uniquement représentée la section aval 7 de la nacelle 3, abritant un dispositif d'inversion de poussée 9 et une tuyère variable 11 en aval du dispositif d'inversion de poussée.

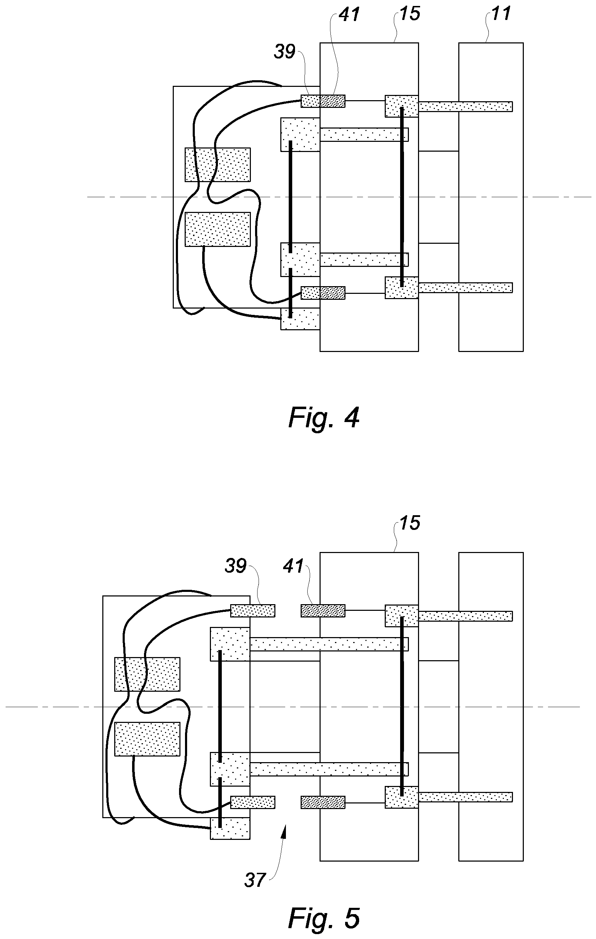

Le turboréacteur comprend quant à lui un carter de soufflante 13 abritant une soufflante (non visible), le moteur à proprement parler étant visible sur les figures 4 et 5.

Le dispositif d'inversion de poussée 9 comprend un ou plusieurs capots mobiles 15 déplaçables le long de l'axe longitudinal 17 de la nacelle, alternativement entre une position rétractée telle que représentée et une position déployée représentée sur la figure 5.

A cet effet, l'inverseur de poussée peut être du type « D-duct », c'est-à-dire que l'inverseur de poussée comprend deux capots mobiles, chaque capot constituant une partie de la structure externe fixe de la nacelle et une partie de la structure interne fixe de la nacelle, la veine de circulation du flux d'air secondaire étant définie entre lesdites structures externe et interne.

L'inverseur de poussée peut également être du type « O-duct », c'est-à-dire constitué par un capot mobile externe annulaire s'étendant de part et d'autre d'un mât réacteur sur lequel est suspendu l'ensemble propulsif.

Quel que soit le type d'inverseur de poussée, D-duct ou O-duct, le capot mobile est mis en mouvement grâce à un dispositif de commande et d'actionnement 19 de l'inverseur de poussée.

Un tel dispositif peut être hydraulique, pneumatique, ou encore électrique.

Dans le cas d'un dispositif de commande et d'actionnement électrique, un tel dispositif comprend un boîtier de gestion électronique 21 du dispositif d'inversion de poussée, monté par exemple sur le carter de soufflante 13 du turboréacteur, d'une part relié au réseau électrique de l'avion, et d'autre part à un moteur électrique 23 du dispositif d'inversion de poussée, par l'intermédiaire de câbles électriques 25.

Le moteur électrique du dispositif d'inversion de poussée est lui-même relié à des actionneurs constitués par des vérins 27 reliés au(x) capot(s) mobile(s) 15 de l'inverseur de poussée.

La mise en mouvement des actionneurs par le moteur électrique peut être classiquement obtenue par l'intermédiaire d'arbres flexibles 29 bien connus de l'art antérieur, permettant de transmettre le couple moteur à chacun des vérins.

Alternativement, chaque vérin peut être mis en mouvement grâce à un moteur électrique qui lui est dédié. Dans ce cas, le boîtier de gestion électronique du dispositif d'inversion de poussée est relié à chaque moteur électrique (variante non représentée).

Le ou les moteur(s) électrique(s) sont par exemple montés sur le carter de soufflante 13, ou encore sur un cadre fixe supportant le dispositif d'inverseur de poussée (variante non représentée).

A titre d'exemple non limitatif, le capot d'inverseur est mis en mouvement par l'intermédiaire de quatre vérins 27 répartis sur la circonférence de la nacelle.

La tuyère variable 11 comprend quant à elle un ou plusieurs capot(s) 31, mobile(s) en translation longitudinale grâce à un dispositif de commande et d'actionnement 33 de la tuyère.

Dans le cadre de l'invention, le dispositif de commande et d'actionnement de la tuyère est électrique. Comme pour le dispositif de commande et d'actionnement d'inversion de poussée, le dispositif de commande et d'actionnement de la tuyère comprend un boîtier de gestion électronique 35 de la tuyère, relié au réseau électrique de l'avion.

Selon l'invention, le dispositif comprend un ou plusieurs interrupteurs électriques 37 comprenant chacun un connecteur fixe 39 et un connecteur mobile 41.

Le connecteur fixe 39 est solidaire du carter de soufflante 13 du turboréacteur ou de la structure fixe de la nacelle, par exemple du cadre supportant le dispositif d'inversion de poussée (variante non représentée).

Le connecteur fixe 39 est monté en extrémité aval du carter de soufflante 13, ou alternativement en extrémité aval de la structure fixe de la nacelle, et est relié au boîtier de gestion électronique 35 de la tuyère.

Le connecteur mobile 41 est quant à lui monté sur le capot mobile 15 du dispositif d'inversion de poussée, par exemple en extrémité amont dudit capot.

Le connecteur mobile 41 est lui-même relié par l'intermédiaire de câbles électriques 43 à des actionneurs du ou des capots de tuyère, typiquement constitués par des vérins 45 reliés au(x)dit(s) capot(s).

Comme représenté sur la figure 2, les connecteurs fixes 39 et mobiles 41 sont adaptés pour coopérer entre eux lorsque le capot mobile 15 d'inverseur est dans sa position totalement rétractée, c'est-à-dire lorsque la nacelle est en fonctionnement jet direct.

A titre d'exemple non limitatif, le dispositif de commande et d'actionnement 33 de la tuyère variable comprend un interrupteur électrique 37 pour chaque actionneur de capot mobile 31 de la tuyère.

On se réfère à présent à la figure 2, illustrant un premier mode de réalisation de l'interrupteur électrique 37.

Les connecteurs fixe 39 et mobile 41 se présentent tous deux sous la forme d'un boîtier électrique chacun renfermant respectivement une pluralité de contacts électriques fixe 47 et mobile 49.

Lorsque l'interrupteur 37 est en position fermée, position représentée sur la figure 2, les contacts électriques fixes 47 coopèrent avec les contacts électriques mobiles 49, c'est-à-dire que les axes longitudinaux des contacts électriques fixes 47 sont sensiblement confondus avec ceux des contacts électriques mobiles 49.

Des moyens de centrage et de guidage des contacts électriques sont généralement prévus entre les connecteurs fixe et mobile afin d'assurer un bon positionnement entre les contacts électriques fixes et les contacts électriques mobiles lorsque l'interrupteur se trouve en position fermée, c'est-à-dire lorsque la nacelle est en fonctionnement jet direct.

Selon un deuxième mode de réalisation de l'interrupteur 37, représenté sur la figure 3, les connecteurs fixes comprennent des moyens pour absorber les désaxages axiaux, radiaux et angulaires dus aux déformations de la structure, de façon à ne pas endommager les contacts électriques et à assurer la continuité électrique lorsque l'interrupteur est fermé.

A cet effet, le boîtier électrique renfermant les contacts électriques fixes 47 présente une portion extrême 51 conique, autorisant un débattement axial, angulaire et radial des connecteurs mobiles 41.

Ces extrémités coniques permettent un bon centrage des connecteurs mobiles 41 avec les connecteurs fixes 39, et en conséquence de ne pas endommager les contacts électriques lors de la connexion ou déconnexion. Cela permet en outre de s'affranchir de moyens de centrage et de guidage spécifiques entre les contacts électriques, ce qui permet avantageusement de réduire le poids de l'ensemble par rapport au mode de réalisation précédent.

Bien sûr, lesdits moyens pour absorber les écarts axiaux, radiaux et angulaires peuvent être montés alternativement sur les connecteurs électriques mobiles ou peuvent aussi bien être des dispositifs complémentaires montés sur chaque partie du connecteur.

Le fonctionnement de l'ensemble propulsif selon l'invention va à présent être décrit.

En situation de fonctionnement jet direct de la nacelle, représentée sur les figures 1 et 4, le capot 15 d'inverseur est en position rétractée.

L'interrupteur 37 est en position fermée, et les connecteurs électriques de l'interrupteur 37 coopèrent ainsi entre eux, ce qui permet l'alimentation électrique du dispositif de commande et d'actionnement 33 de la tuyère 11.

Sur la figure 1, la tuyère 11 est en position rétractée, et sa section de sortie peut être modifiée dans le but d'optimiser les performances moteur de l'ensemble propulsif, lorsque l'avion est en phase de vol (décollage, atterrissage ou croisière).

Comme représenté sur la figure 4, le dispositif de commande et d'actionnement de la tuyère a été activé, et la tuyère a été déplacée vers l'aval de la nacelle afin de réduire la section de sortie du flux d'air secondaire.

Lorsque l'on souhaite passer en fonctionnement jet inversé, le boîtier électronique du dispositif de commande et d'actionnement de l'inverseur de poussée commande le déplacement du ou des capot(s) mobile(s) 15 de l'inverseur depuis leur position rétractée représentée sur les figures 1 et 4 vers leur position déployée représentée sur la figure 5.

L'interrupteur électrique 37 passe alors automatiquement depuis sa position fermée vers sa position ouverte, ce qui correspond à une déconnexion entre les connecteurs électriques fixes 39 et les connecteurs électriques mobiles 41, qui ne coopèrent plus entre eux.

En fait, dès lors qu'une translation du ou des capot(s) mobile(s) de l'inverseur de poussée a lieu, l'interrupteur électrique est en position ouverte, ce qui interdit l'alimentation électrique du dispositif de commande et d'actionnement 33 de la tuyère. Dans une telle situation, le boîtier électronique 35 de gestion de la tuyère 11 n'a plus aucun effet sur les vérins 27 de la tuyère.

Lorsque la nacelle repasse en fonctionnement jet direct, les connecteurs fixes 39 et mobiles 41 se reconnectent automatiquement, et l'interrupteur électrique 37 passe de sa position ouverte vers sa position fermée.

Il convient de noter que si l'on souhaite que la tuyère se trouve en position rétractée lors d'un fonctionnement en jet inversé de la nacelle, le ou les capot(s) de tuyère sont déplacés depuis leur position aval vers leur position amont avant de commander le déplacement en translation du ou des capot(s) d'inverseur depuis leur position rétractée vers leur position déployée.

Grâce à la présente invention, en prévoyant un dispositif de commande et d'actionnement électrique de la tuyère variable comprenant un interrupteur électrique adapté pour être fermé lorsque la nacelle se trouve en fonctionnement jet direct et ouvert lorsque la nacelle se trouve en fonctionnement jet inversé, le dispositif d'actionnement de la tuyère variable est automatiquement privé d'alimentation électrique dès lors que le capot du dispositif d'inversion de poussée ne se trouve pas dans sa position escamotée, ce qui permet de déconnecter la tuyère variable du réseau électrique de l'avion pendant la phase d'inversion de poussée, et ainsi d'éviter un déplacement intempestif de la tuyère variable pendant la phase d'inversion de poussée.

Cela permet avantageusement d'éviter un dysfonctionnement du réseau électrique de l'avion, non adapté pour supporter simultanément une opération sur le dispositif d'inversion de poussée et sur la tuyère variable, ce qui pourrait entraîner un dysfonctionnement du dispositif d'inversion de poussée.

En outre, l'interrupteur électrique constitue un moyen simple de déconnexion du dispositif d'actionnement de la tuyère lorsque la nacelle est en fonctionnement jet inversé. Lorsque la nacelle retrouve sa position de fonctionnement jet direct, l'interrupteur passe automatiquement de sa position ouverte vers sa position fermée, autorisant en conséquence l'alimentation électrique du dispositif d'actionnement de la tuyère variable, et en conséquence une variation de la section de sortie de la tuyère.

Enfin, comme il va de soi, l'invention ne se limite pas aux seules formes de réalisation de cet ensemble propulsif, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Ensemble propulsif (1) pour aéronef, comprenant une nacelle (3) pour turboréacteur, ladite nacelle comprenant une structure fixe et une structure mobile (7) en aval de ladite structure fixe, ladite structure mobile comprenant :
- un dispositif d'inversion de poussée (9) comprenant au moins un capot (15) mobile en translation le long d'un axe sensiblement longitudinal (17) de la nacelle entre une position rétractée correspondant à un fonctionnement jet direct de la nacelle et une position déployée correspondant à une position jet inversé de la nacelle,
- une tuyère (11) d'éjection d'un flux d'air secondaire, en aval dudit dispositif d'inversion de poussée, comprenant un dispositif de commande et d'actionnement (33) électrique de ladite tuyère,
ledit ensemble étant **caractérisé en ce que** le dispositif de commande et d'actionnement de la tuyère comprend au moins un interrupteur électrique (37) adapté pour être fermé lors d'un fonctionnement jet direct de la nacelle et pour être ouvert lors d'un fonctionnement jet inversé de la nacelle, ledit interrupteur électrique (37) comprenant au moins un connecteur fixe (39) solidaire de la structure fixe de la nacelle ou d'un carter (13) de soufflante du turboréacteur, ledit connecteur fixe (39) se présentant sous la forme d'un boîtier électrique renfermant une pluralité de contacts électriques fixes (47), et au moins un connecteur mobile (41) solidaire du capot (15) du dispositif d'inversion de poussée, ledit connecteur mobile (41) se présentant sous la forme d'un boîtier électrique renfermant une pluralité de contacts électriques mobiles (49), lesdits connecteurs (39, 41) étant conformés pour coopérer entre eux lorsque la nacelle est en fonctionnement jet direct et pour ne pas coopérer entre eux lorsque la nacelle est en fonctionnement jet inversé, de sorte que la transmission d'un courant électrique est directement réalisé par contact entre lesdits connecteurs fixe (39) et mobile (41).

2. Ensemble propulsif (1) selon la revendication 1, **caractérisé en ce que** le connecteur mobile (41) est monté en extrémité amont dudit capot (15) du dispositif d'inversion de poussée, et **en ce que** le connecteur fixe (39) est monté en extrémité aval de la structure fixe de la nacelle ou du carter (13) de soufflante du turboréacteur.

3. Ensemble propulsif (1) selon l'une des revendications 1 ou 2, **caractérisé en ce qu'**un axe longitudinal du contact électrique fixe (47) du connecteur fixe (39) est sensiblement confondu avec un axe longitudinal du contact électrique mobile (49) du connecteur mobile (41), au moins lorsque l'interrupteur est dans une position fermée.

4. Ensemble propulsif (1) selon l'une quelconque des revendications 1 à 3, **caractérisé en ce qu'**au moins un connecteur fixe (39), respectivement mobile (41), est conformé pour supporter un désaxage axial, radial ou angulaire d'au moins un connecteur mobile (41), respectivement fixe (39).

5. Ensemble propulsif (1) selon l'une quelconque des revendications 1 à 4, **caractérisé en ce que** ledit capot (15) du dispositif d'inversion de poussée (9) est mis en mouvement grâce à un dispositif de commande et d'actionnement (19) comprenant une pluralité de vérins (27) actionnés par l'intermédiaire d'au moins un moteur électrique (23) commandé par un boîtier de gestion électronique (21) du dispositif d'inversion de poussée (9).

6. Ensemble propulsif (1) selon l'une quelconque des revendications 1 à 5, **caractérisé en ce que** le dispositif de commande et d'actionnement (33) de la tuyère variable (11) comprend :
- un boîtier de gestion électronique (35) de la tuyère, relié audit interrupteur électrique (37),
- au moins un vérin (45) actionné par l'intermédiaire d'au moins un moteur électrique monté sur ledit capot (15) du dispositif d'inversion de poussée, ledit moteur étant relié audit interrupteur électrique (37).

7. Ensemble propulsif (1) selon la revendication 6, **caractérisé en ce que** le boîtier de gestion électronique (35) de la tuyère variable est relié au connecteur fixe (39) de l'interrupteur électrique (37), et **en ce que** le connecteur mobile (41) est relié au moteur électrique dudit vérin (45).

## Patentansprüche

1. Flugzeugantriebsanordnung (1), umfassend eine Turbinenstrahltriebwerksgondel (3), wobei die Gondel eine feste Struktur und eine bewegliche Struktur (7) stromabwärts der festen Struktur umfasst, wobei die bewegliche Struktur umfasst:
- eine Schubumkehrvorrichtung (9), die wenigstens eine Verkleidung (15) umfasst, die entlang einer im Wesentlichen Längsachse (17) der Gondel zwischen einer eingefahrenen Stellung, die einem Direktstrahlbetrieb der Gondel entspricht, und einer ausgefahrenen Stellung, die einem Strahlumkehrbetrieb der Gondel entspricht, translationsbeweglich ist,
- eine Sekundärluftstrom-Ausstoßdüse (11) stromabwärts der Schubumkehrvorrichtung, die eine elektrische Steuer- und Betätigungsvorrichtung (33) der Düse umfasst,
wobei die Anordnung **dadurch gekennzeichnet ist, dass** die Steuer- und Betätigungsvorrichtung der Düse wenigstens einen elektrischen Schalter (37) umfasst, der dafür eingerichtet ist, bei einem Direktstrahlbetrieb der Gondel geschlossen zu sein und dafür, bei einem Strahlumkehrbetrieb der Gondel offen zu sein, wobei der elektrische Schalter (37) wenigstens einen festen Verbinder (39) umfasst, der fest mit der festen Struktur der Gondel oder mit einem Gebläsegehäuse (13) des Turbinenstrahltriebwerks verbunden ist, wobei sich der feste Verbinder (39) in der Form einer Elektrodose zeigt, die eine Vielzahl von festen elektrischen Kontakten (47) umschließt, und wenigstens einen beweglichen Verbinder (41), der fest mit der Verkleidung (15) der Schubumkehrvorrichtung verbunden ist, wobei sich der bewegliche Verbinder (41) in der Form einer Elektrodose zeigt, die eine Vielzahl von beweglichen elektrischen Kontakten (49) umschließt, wobei die Verbinder (39, 41) dafür ausgestaltet sind, zusammenzuwirken, wenn sich die Gondel in Direktstrahlbetrieb befindet, und dafür, nicht zusammenzuwirken, wenn sich die Gondel im Strahlumkehrbetrieb befindet, derart, dass die Übertragung eines elektrischen Stroms direkt durch Kontakt zwischen den festen (39) und beweglichen (41) Verbindern ausgeführt wird.

2. Antriebsanordnung (1) nach Anspruch 1, **dadurch gekennzeichnet, dass** der bewegliche Verbinder (41) am stromaufwärtigen Ende der Verkleidung (15) der Schubumkehrvorrichtung montiert ist, und dadurch, dass der feste Verbinder (39) am stromabwärtigen Ende der festen Struktur der Gondel oder des Gebläsegehäuses (13) des Turbinenstrahltriebwerks montiert ist.

3. Antriebsanordnung (1) nach einem der Ansprüche 1 oder 2, **dadurch gekennzeichnet, dass** eine Längsachse des festen elektrischen Kontakts (47) des festen Verbinders (39) im Wesentlichen mit einer Längsachse des beweglichen elektrischen Kontakts (49) des beweglichen Verbinders (41) zusammenfällt, wenigstens dann, wenn sich der Schalter in einer geschlossenen Stellung befindet.

4. Antriebsanordnung (1) nach einem der Ansprüche 1 bis 3, **dadurch gekennzeichnet, dass** wenigstens ein fester (39) beziehungsweise beweglicher Verbinder (41) dafür ausgestaltet ist, eine axiale, radiale oder winkelförmige Achsenabweichung von wenigstens einem beweglichen (41) beziehungsweise festen Verbinder (39) zu unterstützen.

5. Antriebsanordnung (1) nach einem der Ansprüche 1 bis 4, **dadurch gekennzeichnet, dass** die Verkleidung (15) der Schubumkehrvorrichtung (9) dank einer Steuer- und Betätigungsvorrichtung (19) in Bewegung gesetzt wird, die eine Vielzahl von Stellzylinders (27) umfasst, die mittels wenigstens eines Elektromotors (23) betätigt werden, der durch eine elektronische Steuerdose (21) der Schubumkehrvorrichtung (9) gesteuert wird.

6. Antriebsanordnung (1) nach einem der Ansprüche 1 bis 5, **dadurch gekennzeichnet, dass** die Steuer- und Betätigungsvorrichtung (33) der variablen Düse (11) umfasst:
- eine elektronische Steuerdose (35) der Düse, die an den elektrischen Schalter (37) angeschlossen ist,
- wenigstens einen Stellzylinder (45), der mittels wenigstens eines Elektromotors betätigt wird, der an der Verkleidung (15) der Schubumkehrvorrichtung montiert ist, wobei der Motor an den elektrischen Schalter (37) angeschlossen ist.

7. Antriebsanordnung (1) nach Anspruch 6, **dadurch gekennzeichnet, dass** die elektronische Steuerdose (35) der variablen Düse an den festen Verbinder (39) des elektrischen Schalters (37) angeschlossen ist, und dadurch, dass der bewegliche Verbinder (41) an den Elektromotor des Stellzylinders (45) angeschlossen ist.

## Claims

1. A propulsion unit (1) for an aircraft, comprising a nacelle (3) for a turbojet engine, said nacelle comprising a fixed structure and a movable structure (7) downstream of said fixed structure, said movable structure comprising:
- a thrust reverser device (9) comprising at least one cowl (15) movable in translation along a substantially longitudinal axis (17) of the nacelle between a retracted position corresponding to a direct jet operation of the nacelle and a deployed position corresponding to a reverse jet position of the nacelle,
- an ejection nozzle (11) for a secondary air flow, downstream of said thrust reverser device, comprising an electrical control and actuation device (33) of said nozzle,
said unit being **characterized in that** the control and actuation device of the nozzle comprises at least one electrical switch (37) adapted to be closed during a direct jet operation of the nacelle and to be opened during a reverse jet operation of the nacelle, said electrical switch (37) comprising at least one fixed connector (39) secured to the fixed structure of the nacelle or a fan casing (13) of the turbojet engine, said fixed connector (39) being provided in the form of an electrical box holding a plurality of fixed electrical contacts (47), and at least one movable connector (41) secured to the cowl (15) of the thrust reverser device, said movable connector (41) being in the form of an electrical box holding a plurality of movable electrical contacts (49), said connectors (39, 41) being shaped to cooperate with each other when the nacelle is in direct jet operation and not to cooperate with each other when the nacelle is in reverse jet operation, so that the transmission of an electric current is carried out directly by contact between said fixed (39) and movable (41) connectors.

2. The propulsion unit (1) according to claim 1, **characterized in that** the movable connector (41) is mounted at the upstream end of said cowl (15) of the thrust reverser device, and **in that** the fixed connector (39) is mounted at the downstream end of the fixed structure of the nacelle or the fan casing (13) of the turbojet engine.

3. The propulsion unit (1) according to any of claims 1 or 2, **characterized in that** a longitudinal axis of the fixed electrical contact (47) of the fixed connector (39) is substantially coincident with a longitudinal axis of the movable electrical contact (49) of the movable connector (41), at least when the switch is in a closed position.

4. The propulsion unit (1) according to any one of claims 1 to 3, **characterized in that** at least one fixed (39), respectively movable (41) connector, is shaped to support an axial, radial or angular offset of at least one movable (41), respectively fixed (39) connector.

5. The propulsion unit (1) according to any one of claims 1 to 4, **characterized in that** said cowl (15) of the thrust reverser device (9) is moved thanks to a control and actuation device (19) comprising a plurality of cylinders (27) actuated by means of at least one electric motor (23) controlled by an electronic management box (21) of the thrust reverser device (9).

6. The propulsion unit (1) according to any one of claims 1 to 5, **characterized in that** the control and actuation device (33) of the variable nozzle (11) comprises:
- an electronic management box (35) of the nozzle, connected to said electrical switch (37),
- at least one cylinder (45) actuated by means of at least one electric motor mounted on said cowl (15) of the thrust reverser device, said motor being connected to said electrical switch (37).

7. The propulsion unit (1) according to claim 6, **characterized in that** the electronic control box (35) of the variable nozzle is connected to the fixed connector (39) of the electrical switch (37), and **in that** the movable connector (41) is connected to the electric motor of said cylinder (45).
